# EUROPÄISCHE PATENTSCHRIFT

(11) **EP 1 736 635 B1**
(45) Veröffentlichungstag und Bekanntmachung des Hinweises auf die Patenterteilung: **02.05.2012**
(21) Anmeldenummer: 06114584.3
(22) Anmeldetag: 26.05.2006
(51) Int. Cl.: F01D 5/08, F02C 7/12

(54) **Luftführungssystem zwischen Verdichter und Turbine eines Gasturbinentriebwerks**
Air transfer system between compressor and turbine of a gas turbine engine
Système de transfert d'air entre le compresseur et la turbine d'une turbine à gaz

(30) Priorität: 31.05.2005 DE 102005025244
(43) Veröffentlichungstag der Anmeldung: 27.12.2006
(73) Patentinhaber: Rolls-Royce Deutschland Ltd & Co KG, 15827 Blankenfelde-Mahlow (DE)
(72) Erfinder: Klinger, Dr. Holger, 14532, Kleinmachnow (DE)
(74) Vertreter: Gross, Felix

(56) Entgegenhaltungen:
- EP-A- 0 447 886
- EP-A- 0 926 315
- EP-A- 1 367 221
- WO-A-03/098020
- GB-A- 2 184 167
- US-A1- 2002 178 726
- US-B2- 6 722 138

## Beschreibung

Die Erfindung betrifft ein Luftführungssystem zwischen Verdichter und Turbine eines mit hohem Druckverhältnis betriebenen Gasturbinentriebwerks.

Die Leistungsfähigkeit von Gasturbinentriebwerken kann unter anderem durch eine Erhöhung des Druckverhältnisses gesteigert werden. Damit sind jedoch zum einen auf die Wellenlagerung wirkende erhöhte Achskräfte verbunden, die kompensiert werden müssen, und zum anderen ist eine deutliche Temperaturerhöhung und eine entsprechend hohe Wärmebelastung der stromab an den Kompressor anschließenden Bauteile, insbesondere des Verdichterwellenkonus und des diesen umgebenden Brennkammerinnengehäuses, zu verzeichnen. Infolge umfangreicher Wirbelzonen zwischen feststehendem Gehäuse und rotierender Welle und daraus resultierenden Reibungsverlusten kommt es zu einer weiteren Temperaturerhöhung der Luft und in deren Folge zu einer erhöhten Wärmebelastung des zwischen Verdichter und Turbine befindlichen Wellenstücks und des dieses umgebenden Brennkammerinnengehäuses. Darüber hinaus wird durch die Wirbelstrukturen das Abströmen der Luft aus der Kammer erschwert und dadurch die Lufttemperatur und die Wärmebelastung des Materials weiter erhöht bzw. die Lebensdauer der betreffenden Bauteile verringert.

Aufgrund der hohen Wärmebelastung und der dadurch bedingten geringeren Lebensdauer ist es erforderlich, für die betreffenden Bauteile kostenintensive, hochwärmebeständige Werkstoffe einzusetzen. Andererseits steht aufgrund der in der Kammer zwischen Brennkammerinnengehäuse und Welle herrschenden Verhältnisse und der damit verbundenen Temperaturerhöhung auch für die anschließende Kühlung der Hochdruckturbine nur Kühlluft mit einer erhöhten Temperatur zur Verfügung.

Ein Luftführungssystem zwischen Kompressor und Turbine mit den im Oberbegriff des Anspruchs 1 zusammengefassten Merkmalen ist aus dem Dokument US 6 722 138 bekannt.

Der Erfindung liegt die Aufgabe zugrunde, ein mit einem erhöhten Druckverhältnis bei gleichzeitiger Achsschubkompensation betriebenes Gasturbinentriebwerk so auszubilden, dass die Wärmebelastung in der mit einem Kühlluftstrom beaufschlagten, zwischen der Hochdruckwelle und dem Brennkammerinnengehäuse gebildeten Luftkammer gering ist und dementsprechend kostengünstige Materialien eingesetzt werden können. Ein weiteres Ziel ist es, den Kühlluftverbrauch zu reduzieren und dadurch den Triebwerkswirkungsgrad zu erhöhen und den Kraftstoffverbrauch zu senken.

Erfindungsgemäß wird die Aufgabe mit einem Luftführungssystem gemäß den Merkmalen des Patentanspruchs 1 gelöst. Zweckmäßige und vorteilhafte Weiterbildungen der Erfindung sind Gegenstand der Unteransprüche.

Das Luftführungssystem umfasst eine Luftkammer, die radial von dem den Verdichterwellenkonus der Hochdruckwelle umgebenden Brennkammerinnengehäuse und axial durch eine stromauf und eine stromab vorgesehene Dichtung zum rotierenden Verdichterwellenkonus hin begrenzt ist. Der unter Druckreduzierung an der ersten Dichtung in die Luftkammer eingebrachte Teil der Kompressorluft gelangt über stromab vorgesehene Luftaustrittsöffnungen als erste Turbinenkühlluft zur Turbine. An die stromab vorgesehene zweite Dichtung schließt sich eine Achsschubkompensationskammer an, in der der höhere Druck eines zweiten von der Verdichterluft abgezweigten Kühlluftstroms anliegt, um die bei einem mit hohem Druckverhältnis betriebenen Kompressor wirkenden hohen Achskräfte zu kompensieren. Um die bei dem hohen Verdichterdruckverhältnis auftretende Temperaturerhöhung und Wärmebelastung der Bauteile der Luftkammer zu reduzieren, weist der hintere Teil der Luftkammer ein sich axial erstreckendes Strömungsführungsmittel in Form eines Luftleitringes auf, der im hinteren Bereich der Luftkammer die über den Dichtspalt in die vordere Luftkammer stromauf einströmende zweite Turbinenkühlluft von der ersten Turbinenkühlluft und auch von in die Luftkammer ragenden Bauteilen trennt. Somit werden bei erhöhtem Kompressordruckverhältnis die höheren Achsschubkräfte kompensiert, und die hohe Wärmebelastung der Bauteile der Luftkammer wird begrenzt, weil durch das geführte und abgetrennte Einströmen der Turbinenkühlluft höheren Drucks aus der Achsschubkompensationskammer in die Luftkammer ein verbessertes Spülen des zwischen der rotierenden Welle und dem stehenden Brennkammerinnengehäuse gebildeten Zwischenraums bei gleichzeitiger Reduzierung der Wirbelbildung erreicht wird. Die Lebensdauer wird erhöht und es können kostengünstige Werkstoffe und weniger Kühlluft eingesetzt werden.

In Ausgestaltung der Erfindung ist der Luftleitring so ausgebildet, dass die Kühlluft in der Luftkammer über Luftdurchgangsöffnungen oder -taschen, einen Ringspalt oder vorzugsweise die Leitbleche eines Leitschaufelkranzes zu den Luftaustrittsöffnungen der Luftkammer geleitet wird. Besonders vorteilhaft ist die Anordnung von in Umfangsrichtung gestaffelten Leitblechen oder von zur Maschinenachse angestellten Durchgangsbohrungen, weil dadurch die Umlenkung der rotierenden Wirbelströmung in axialer Richtung verlustärmer auf einen höheren Totaldruck erfolgt.

In weiterer Ausgestaltung der Erfindung kann dem Luftleitring auch ein Verkleidungsring zur Abschirmung der in die Luftkammer ragenden Befestigungsmittel gegenüber der strömenden Luftmasse zugeordnet sein. Dieser Verkleidungsring kann auch das Brennkammerinnengehäuse bis zu den Befestigungsmitteln vollständig abdecken, um dadurch das rotierende Luftvolumen zu verkleinern und gleichzeitig als Wärmeschutz zu fungieren. Der oben erwähnte Luftleitring ist vorzugsweise mehrteilig ausgebildet, um die Montierbarkeit zu gewährleisten.

Ausführungsbeispiele der Erfindung werden anhand der Zeichnung näher erläutert. Es zeigen:
- Fig. 1: eine Teilansicht eines Gasturbinentriebwerks zwischen Kompressor und Turbine, mit einem in der von dem Brennkammerinnengehäuse umschlossenen, mit Kompressorluft beaufschlagten Kammer angeordneten Strömungsführungsmittel;
- Fig. 2: eine Schnittansicht eines Teils der Luftkammer mit einer anderen Ausführungsform des Strömungsführungsmittels;
- Fig. 3: eine Schnittansicht eines Teils der Luftkammer mit einer noch anderen Ausführungsform des Strömungsführungsmittels;
- Fig. 4: eine Schnittansicht eines Teils der Luftkammer mit einer weiteren Ausführungsvariante des Strömungsführungsmittels;
- Fig. 5: die Luftkammer nach Fig. 1 mit einem Strömungsführungsmittel nach Fig. 2 und mit einem zusätzlichen Strömungsführungsmittel.

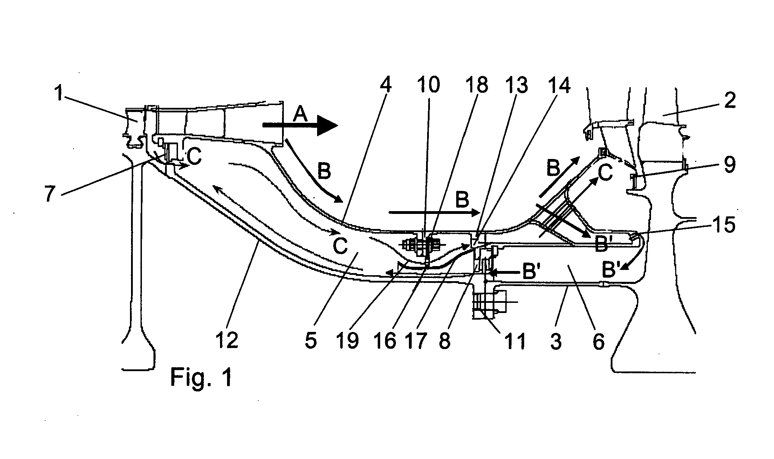

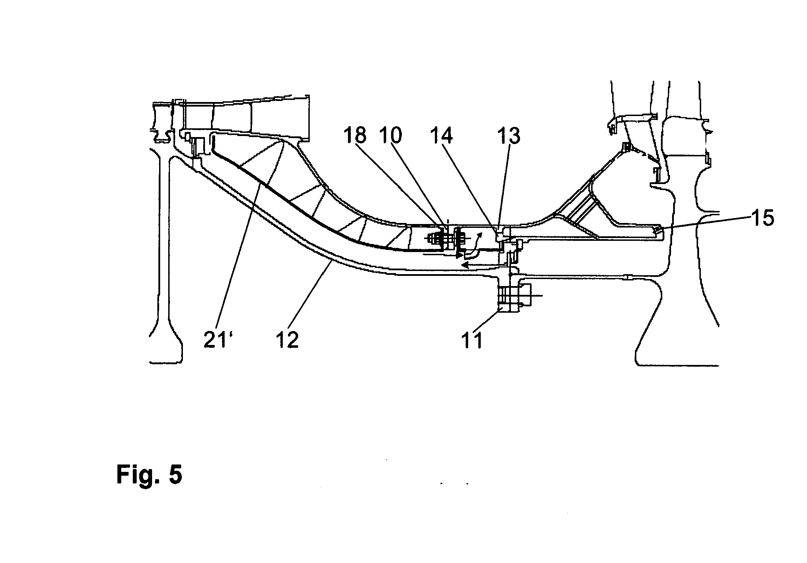

Aus der in den Figuren 1 und 5 wiedergegebenen Teilansicht eines Gasturbinentriebwerks sind der Verdichter 1 und die Turbine 2, die über die Welle 3 miteinander verbunden sind, sowie das Brennkammerinnengehäuse 4 erkennbar. Das Brennkammerinnengehäuse 4 umschließt eine sich längs der Welle 3 zwischen Verdichter 1 und Turbine 2 erstreckende zweiteilige Kavität, die eine Luftkammer 5 und eine Achsschubkompensationskammer 6 umfasst und die zu der mit hoher Drehzahl umlaufenden Welle 3 hin durch eine erste Dichtung 7, eine zweite Dichtung 8 und eine dritte Dichtung 9 abgedichtet ist. Die beiden Teile des zweiteiligen Brennkammerinnengehäuses 4 und 13 (Stützring) sind über eine in die Luftkammer 5 ragende Flanschverbindung 10 miteinander verbunden. Über eine weitere Flanschverbindung 11 ist der Verdichterwellenkonus 12, in dessen Bereich die Luftkammer 5 liegt, an die Welle 3 angeschlossen.

Gemäß den in Fig. 1 dargestellten Pfeilen gelangt ein überwiegender Teil (Pfeil A) der vom Verdichter erzeugten Druckluft in die Brennkammer (nicht dargestellt). Ein weiterer Teil (Pfeil B) der Verdichterluft strömt als Kühlluft innerhalb des Brennkammerinnengehäuses 4 zur Turbine 2 und davon ein weiterer Teil (Pfeil B')zur Vordralldüse 15 und damit auch in die Achsschubkompensationskammer 6 und von dieser über die zweite Dichtung 8 auch in die von dem Verdichterwellenkonus 12 durchdrungene Luftkammer 5. Schließlich gelangt ein weiterer Teil (Pfeil C) der Verdichterluft in die Luftkammer 5 (unterhalb des Brennkammerinnengehäuses 4) und über am Umfang eines vom Brennkammerinnengehäuse 4 abstrebenden Stützringes 13 ausgebildete Luftaustrittsöffnungen 14 als Kühlluft zur Turbine 2. Die Luft gemäß Pfeil B wird über den gesamten Verdichteraustrittsquerschnitt entnommen, und zwar mit der mittleren Verdichteraustrittstemperatur, während die Luft gemäß Pfeil C überwiegend aus dem heißen Nabenbereich hinter der letzten Rotorstufe entnommen wird. Die Luft gemäß Pfeil B ist somit kühler als die Luft gemäß Pfeil A. In der Achsschubkompensationskammer 6 ist der Druck größer als in der Luftkammer 5, um dadurch die auf die Welle wirkenden großen Achskräfte zu kompensieren, die durch das zur Leistungssteigerung des Triebwerks gewählte hohe Druckverhältnis des Verdichters 1 erzeugt werden.

Das hohe Druckverhältnis und zusätzlich die durch Ausbildung von umfangreichen Wirbelzonen in der Luftkammer in der Strömung erzeugten Reibungsverluste führen zu einer deutlichen Temperaturerhöhung, der durch Anordnung eines Strömungsführungsmittels 16 in der Luftkammer 5 begegnet wird. Mit dem Strömungsführungsmittel 16, das zwischen der Eintrittsstelle der Luft am Dichtspalt der zweiten Dichtung 8 zur Achsschubkompensationskammer 6 und den Luftaustrittsöffnungen 14 angeordnet ist, werden die zu- und abströmenden, aufgrund der Rotation des Verdichterwellenkonus 12 rotierenden Luftmassen so geführt, dass die insbesondere am hinteren Ende der Luftkammer 5 auftretende Wirbelbildung reduziert und die gesamten Luftkammer 5 verstärkt gespült wird sowie in der Strömung liegende, ebenfalls eine Wirbelbildung auslösende Teile - zum Beispiel die Flanschverbindung 10 - verkleidet werden. Trotz hohen Kompressordruckverhältnisses und Achsschubkompensation kann somit die Temperatur im Bereich des Verdichterwellenkonus 12 und des Brennkammerinnengehäuses 4 auf einem Niveau gehalten werden, dass den Einsatz kostenaufwendiger Werkstoffe nicht erforderlich macht und eine lange Lebensdauer gewährleistet.

In den Figuren 1 bis 5 sind verschiedene, jeweils zwischen dem Brennkammerinnengehäuse 4 und dem Verdichterwellenkonus 12 am hinteren Ende der Luftkammer 5 - hier an der Flanschverbindung 10 - angebrachte und in jedem Fall die Luftaustrittsöffnungen 14 von dem Lufteintritt über die Dichtung 8 trennende Strömungsführungsmittel 16 dargestellt.

Gemäß Fig. 1 umfasst das Strömungsführungsmittel 16 einen Luftleitring 17, der über einen Befestigungsflansch 18 an die Flanschverbindung 10 des Brennkammerinnengehäuses 4 angeschlossen ist. Der Luftleitring 17 leitet die über den Dichtspalt der Dichtung 8 stromauf strömende Luft entlang des Verdichterwellenkonus 12. Diese kühlere Luft wird aufgrund der Pumpwirkung aus der Zentrifugalkraft der rotierenden Welle 3 entlang der Außenseite des Verdichterwellenkonus 12 stromauf getrieben und verhindert ein stärkeres Aufheizen der Welle 3. In dem Befestigungsflansch 10 ist eine Vielzahl von - beispielsweise in Umfangsrichtung lang gestreckten oder unter einem Winkel zur Maschinenachse angestellten- Luftdurchgangsöffnungen 19 vorgesehen, über die - und die Luftaustrittsöffnungen 14 - die Luft die Luftkammer 5 in Richtung Turbine verlässt.

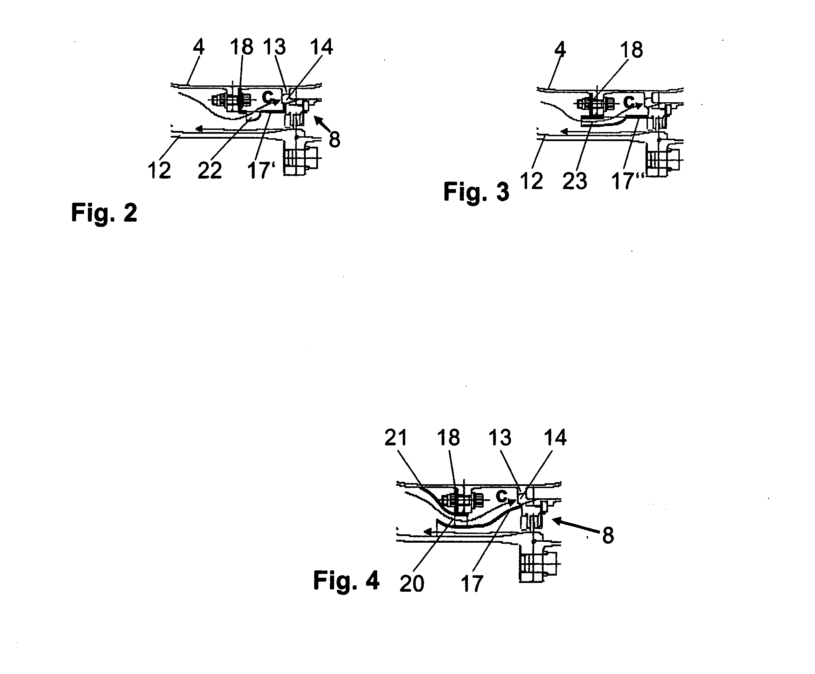

In einer noch anderen, in Fig. 4 dargestellten Ausführungsform sind zwischen dem nach Fig. 1 ausgebildeten Luftleitring 17 und dem Befestigungsflansch 18 Leitmittel 20 vorgesehen, so dass der rotierende Luftmassenstrom in kontrollierter Weise verlustarm umgelenkt wird und ein hohes Totaldruckniveau für nachgeschaltete Verbraucher erhalten bleibt. Die Leitmittel 20 können als Umlenkschaufeln, einfache Umlenkbleche oder zur Maschinenachse angestellte Durchgangsbohrungen ausgebildet sein.

In einer noch anderen, ebenfalls in Fig. 4 wiedergegebenen Ausführungsvariante ist an den Befestigungsflansch 18 ein Verkleidungsring 21 angeformt, der die Luft zu den Luftdurchgangsöffnungen 19 bzw. zu den Leitblechen 20 nach Fig. 4 leitet und gleichzeitig die Wirbelbildung und Reibungsverluste an der Flanschverbindung 10 verringert.

Gemäß Fig. 2 umfasst das Strömungsführungsmittel 16 einen zwischen der Flanschverbindung 10 und dem Flansch 13 angeordneten Luftleitring 17' mit an diesen am Umfang verteilt angeformten Luftdurchgangstaschen 22. In einer weiteren Ausführungsform nach Fig. 3 ist an einem Luftleitring 17" ein umlaufender Ringspalt 23 ausgebildet, und zwar einerseits zur Luftleitung der über die Dichtung 8 rückströmenden Luft entlang dem Verdichterwellenkonus 12 über die Außenflächen und andererseits zum Luftauslass über den Ringspalt 23. Auch bei den Ausführungsformen nach Fig. 1, 2 und 3 kann an den Befestigungsflansch 18 ein Verkleidungsring 21 angeformt sein.

Eine noch andere Ausführungsform eines Verkleidungsringes 21' in Verbindung mit einem Luftleitring 17' gemäß Fig. 2 zeigt Fig. 5. Der im Abstand von nahezu der gesamten Fläche des Brennkammerinnengehäuses 4 angeordnete, bis an die Flanschverbindung 10 reichende Verkleidungsring 21' verkleidet nicht nur die Flanschverbindung 10, sondern das Brennkammerinnengehäuse 4 insgesamt, und dient somit als Wärmeschutzblech und zur Reduzierung des rotierenden Luftvolumens und der dadurch bedingten Verlustleistung. Auch die Ausführungsformen der Luftleitringe 17 und 17" gemäß den Figuren 1, 3 und 4 können mit einem Verkleidungsring 21' nach Fig. 5 kombiniert werden.

### Bezugszeichenliste

- 1: Verdichter
- 2: Turbine
- 3: Welle
- 4: Brennkammerinnengehäuse
- 5: Luftkammer
- 6: Achsschubkompensationskammer
- 7: Erste Dichtung
- 8: Zweite Dichtung
- 9: Dritte Dichtung
- 10: Flanschverbindung v. 4
- 11: Flanschverbindung v. 3
- 12: Verdichterwellenkonus v. 3
- 13: Stützring v. 4
- 14: Luftaustrittsöffnungen in 13
- 15: Vordralldüse
- 16: Strömungsführungsmittel
- 17: Luftleitring v. 16 (17', 17'')
- 18: Befestigungsflansch v. 16
- 19: Luftdurchgangsöffnungen in 18
- 20: Leitmittel
- 21: Verkleidungsring (21')
- 22: Luftdurchgangstaschen v. 17'
- 23: Luftdurchgangsspalt v. 17"
- Pfeil A: Kompressorluft f. Brennkammer
- Pfeil B: Turbinenkühlluft oberhalb v. 4
- Pfeil C: Turbinenkühlluft unterhalb v. 4
- Pfeil B': Turbinenkühlluft abgezweigt v. B

## Patentansprüche

1. Luftführungssystem zwischen Kompressor (1) und Turbine (2) eines mit hohem Druckverhältnis betriebenen Gasturbinentriebwerks, das eine an den Kompressor (1) anschließende, von einer ersten Turbinenkühlluft (C) durchströmte Luftkammer (5) umfasst, die radial von einem Brennkammerinnengehäuse (4) und einem Verdichterwellenkonus (12) sowie axial stromauf von einer ersten Dichtung (7) und stromab von einer zweiten Dichtung (8) mit im Abstand von deren mit dem Verdichterwellenkonus (12) gebildeten Dichtspalt vorgesehenen Luftaustrittsöffnungen (14) begrenzt ist, und eine an die zweite Dichtung (8) anschließende, mit einer zweiten Turbinenkühlluft (B') höheren Drucks beaufschlagte Achsschubkompensationskammer (6) aufweist, **dadurch gekennzeichnet, dass** im hinteren Bereich der Luftkammer (5) ein sich im Wesentlichen axial erstreckendes, zwischen dem Dichtspalt der zweiten Dichtung (8) und den Luftaustrittsöffnungen (14) liegendes Strömungsführungsmittel (16) angeordnet ist.

2. Luftführungssystem nach Anspruch 1, **dadurch gekennzeichnet, dass** das Strömungsführungsmittel (16) ein am hinteren Ende in der Luftkammer (5) umlaufender Luftleitring (17, 17', 17") ist, der den über den Dichtspalt der zweiten Dichtung (8) aus der Achsschubkompensationskammer (6) einströmenden abgezweigten Teil der Turbinenkühlluft (B') entlang dem Verdichterwellenkonus (12) führt und von der zu den Luftaustrittsöffnungen (14) strömenden Turbinenkühlluft (C) und von einer Flanschverbindung am Brennkammerinnengehäuse (4) trennt.

3. Luftführungssystem nach Anspruch 2, **dadurch gekennzeichnet, dass** der Luftleitring (17, 17', 17") mit Hilfe eines Befestigungsflansches (18) an der Flanschverbindung (10) gehalten ist und die Luftströmung zu den Luftaustrittsöffnungen (14) über Luftleitöffnungen (19, 20, 22, 23) erfolgt.

4. Luftführungssystem nach Anspruch 3, **dadurch gekennzeichnet, dass** die Luftleitöffnungen im Befestigungsflansch (18) ausgebildete, in Umfangsrichtung gestreckte Luftdurchgangsöffnungen (19) sind.

5. Luftführungssystem nach Anspruch 3, **dadurch gekennzeichnet, dass** die Luftleitöffnungen durch zwischen dem Befestigungsflansch (18) und dem Luftleitring (17) angeordnete, die Strömungsverluste reduzierende Leitmittel (20) in Form von profilierten Umlenkschaufeln oder einfachen Umlenkblechen oder zur Maschinenachse angestellten Durchgangsbohrungen gebildet sind.

6. Luftführungssystem nach Anspruch 3, **dadurch gekennzeichnet, dass** die Luftleitöffnungen durch am Luftleitring (17') angeformte Luftdurchgangstaschen (22) gebildet sind.

7. Luftführungssystem nach Anspruch 3, **dadurch gekennzeichnet, dass** die Luftleitöffnungen durch einen am Luftleitring (17') angeformten umlaufenden Ringspalt (23) gebildet sind.

8. Luftführungssystem nach Anspruch 2, **dadurch gekennzeichnet, dass** dem Luftleitring (17, 17', 17") ein Verkleidungsring (21) zugeordnet ist, der die Flanschverbindung (10) und den Flansch (18) gegenüber der Turbinenkühlluft (C) abschirmt und diese zu den Luftleitöffnungen (19,20, 22, 23) leitet.

9. Luftführungssystem nach Anspruch 2, **dadurch gekennzeichnet, dass** dem Luftleitring (17, 17', 17") ein Verkleidungsring (21') vorgeschaltet ist, der im Abstand vom Brennkammerinnengehäuse (4) angebracht ist und dieses verkleidet sowie das Luftkammervolumen reduziert und die Turbinenkühlluft (C) zu den Luftleitöffnungen (19, 20, 22, 23) leitet.

## Claims

1. Air guidance system between compressor (1) and turbine (2) of a gas-turbine engine operated with a high pressure ratio, including an air chamber (5) adjoining the compressor (1) and flowed through by a first turbine cooling air (C) which is limited radially by a combustion chamber inner casing (4) and a compressor shaft cone (12), and axially upstream by a first seal (7) and downstream by a second seal (8) with air outlet openings (14) provided at a distance from their sealing gap formed with the compressor shaft cone (12), and which has an axial thrust compensation chamber (6) adjoining the second seal (8) and subjected to a second turbine cooling air (B') of higher pressure, **characterized in that** a substantially axially extending flow guidance means (16) between the sealing gap of the second seal (8) and the air outlet openings (14) is arranged in the rear area of the air chamber (5).

2. Air guidance system in accordance with Claim 1, **characterized in that** the flow guidance means (16) is a circumferential air guide ring (17, 17', 17") at the rear end in the air chamber (5), which guides the diverted portion of the turbine cooling air (B') flowing in via the sealing gap of the second seal (8) from the axial thrust compensation chamber (6) along the compressor shaft cone (12) and separates it from the turbine cooling air (C) flowing to the air outlet openings (14) and from a flange connection on the combustion chamber inner casing (4).

3. Air guidance system in accordance with Claim 2, **characterized in that** the air guide ring (17, 17', 17") is held by means of a fastening flange (18) on the flange connection (10), and the air flows to the air outlet openings (14) via air guide openings (19, 20, 22, 23).

4. Air guidance system in accordance with Claim 3, **characterized in that** the air guide openings are air passage openings (19) formed in the fastening flange (18) and extending in the circumferential direction.

5. Air guidance system in accordance with Claim 3, **characterized in that** the air guide openings are formed by guide means (20) reducing the flow losses and arranged between the fastening flange (18) and the air guide ring (17) and having the form of profiled deflection blades or simple deflection plates or through-holes angled relative to the machine axis.

6. Air guidance system in accordance with Claim 3, **characterized in that** the air guide openings are formed by air passage pockets (22) integral to the air guide ring (17').

7. Air guidance system in accordance with Claim 3, **characterized in that** the air guide openings are formed by a circumferential annular gap (23) integral to the air guide ring (17').

8. Air guidance system in accordance with Claim 2, **characterized in that** the air guide ring (17, 17', 17") is assigned a fairing ring (21) shielding the flange connection (10) and the flange (18) from the turbine cooling air (C) and guiding the latter to the air guide openings (19, 20, 22, 23).

9. Air guidance system in accordance with Claim 2, **characterized in that** the air guide ring (17, 17', 17") has a fairing ring (21') connected upstream of it that is attached at a distance from the combustion chamber inner casing (4) and encloses the latter and also reduces the air chamber volume and guides the turbine cooling air (C) to the air guide openings (19, 20, 22, 23).

## Revendications

1. Système de guidage d'air entre le compresseur (1) et la turbine (2) d'un moteur à turbine à gaz fonctionnant sous un taux de compression élevé, qui comprend une chambre d'air (5) se raccordant au compresseur (1), traversée par un premier flux d'air de refroidissement de turbine (C) et qui est délimitée radialement par un carter interne de la chambre de combustion (4) et un cône de l'arbre du compresseur (12) ainsi qu'axialement en amont par un premier joint (7) et en aval par un second joint (8) avec des orifices de sortie d'air (14) prévus à distance de leur fente d'étanchéité formée avec le cône de l'arbre du compresseur (12), et présente une chambre de compensation de la poussée axiale (6) se raccordant au second joint (8), alimentée par un second flux d'air de refroidissement de turbine (B') sous une pression plus élevée, **caractérisé en ce que** dans la zone arrière de la chambre d'air (5) est disposé un moyen de guidage du flux (16) s'étendant essentiellement dans le sens axial et situé entre la fente d'étanchéité du second joint (8) et les orifices de sortie d'air (14).

2. Système de guidage d'air selon la revendication n° 1, **caractérisé en ce que** le moyen de guidage du flux (16) est un anneau de guidage d'air (17, 17', 17") circonférentiel à l'extrémité arrière dans la chambre d'air (5), qui guide le long du cône de l'arbre du compresseur (12) la partie dérivée du flux d'air de refroidissement de turbine (B') introduite par la fente d'étanchéité du second joint (8) depuis la chambre de compensation de la poussée axiale (6), et le sépare du flux d'air de refroidissement de turbine (C) s'écoulant vers les orifices de sortie d'air (14) et d'un raccord à bride sur le carter interne de la chambre de combustion (4).

3. Système de guidage d'air selon la revendication n° 2, **caractérisé en ce que** l'anneau de guidage d'air (17, 17', 17") est maintenu au raccord à bride (10) à l'aide d'une bride de fixation (18) et que l'écoulement de l'air vers les orifices de sortie d'air (14) s'effectue par des orifices de guidage d'air (19, 20, 22, 23).

4. Système de guidage d'air selon la revendication n° 3, **caractérisé en ce que** les orifices de guidage d'air sont des orifices de passage d'air (19) formés dans la bride de fixation (18) et s'étendant dans le sens circonférentiel.

5. Système de guidage d'air selon la revendication n° 3, **caractérisé en ce que** les orifices de guidage d'air sont constitués par des moyens de guidage (20) réduisant les pertes de flux et disposés entre la bride de fixation (18) et l'anneau de guidage d'air (17), réalisés sous forme d'aubes déflectrices profilées ou de simples plaques déflectrices ou de perçages de passage orientés de façon angulaire vers l'axe de machine.

6. Système de guidage d'air selon la revendication n° 3, **caractérisé en ce que** les orifices de guidage d'air sont constitués de poches de passage d'air (22) formées sur l'anneau de guidage d'air (17').

7. Système de guidage d'air selon la revendication n° 3, **caractérisé en ce que** les orifices de guidage d'air sont constitués d'une fente annulaire (23) circonférentielle formée sur l'anneau de guidage d'air (17').

8. Système de guidage d'air selon la revendication n° 2, **caractérisé en ce qu'**à l'anneau de guidage d'air (17, 17', 17") est associé un anneau de carénage (21), qui isole le raccord à bride (10) et la bride (18) par rapport au flux d'air de refroidissement de turbine (C) et dirige ce dernier vers les orifices de guidage d'air (19, 20, 22, 23).

9. Système de guidage d'air selon la revendication n° 2, **caractérisé en ce qu'**en amont de l'anneau de guidage d'air (17, 17', 17") se trouve un anneau de carénage (21') qui est placé à distance du carter interne de la chambre de combustion (4) et recouvre celui-ci, réduit le volume de la chambre d'air et dirige le flux d'air de refroidissement de turbine (C) vers les orifices de guidage d'air (19, 20, 22, 23).
